# EUROPEAN PATENT APPLICATION

(11) **EP 1 832 975 A1**
(43) Date of publication of application: **12.09.2007**
(21) Application number: 06290406.5
(22) Date of filing: 09.03.2006
(51) Int. Cl.: G06F 9/44

(54) **Automatic generation of source program**

(71) Applicant: Alcatel Lucent, 75008 Paris (FR)
(72) Inventor: Larvet. Philippe, 91470 Forges les Bains (FR)
(74) Representative: Brose, Gerhard

(57) **Abstract**

The invention relates to a method to generate a source program providing a certain service when executed on a computer. The method generates a source program providing a certain service when executed on a computer is described, wherein first said service is described in a natural language and second the natural language is automatically converted into said source program. Furthermore a computer program product causing a computer to perform said method is described.

## Description

The invention relates to a method to generate a source program providing a certain service when executed on a computer.

With the progressive development of communication technologies, Internet technologies and information technologies, the floodgates are opened for new ideas of providing new and useful services to end users, enterprises and governmental organizations. Thereby the problem arises that today generating source program providing a certain service is very costly and time consuming and requires software engineering knowledge. This is because up to now, the inventor of a new service has to describe the desired new service very precisely by knowing and naming all resources required for a new service.

Typically new services are invented by people that have no knowledge in software engineering. Due to this, the 'inventor' of a new service needs an aide with experience in software engineering. This aide helps naming the resources in the description and also coordinates a lot of programmers that finally manually generate the source program on the basis of the description. This proceeding is very costly because plenty of specialists are involved in the development of a new service. Furthermore a lot of time elapses from the first idea of a new service to the introduction of the new service since manually generating source program requires a lot of time.

Due to this today the development of new services, beginning at the description of a new service and ending in the availability of source program providing the new service when executed on a computer, is very costly and time consuming. Hereby the term computer comprises any means to be used to execute a source program such as single or a network of personal computers, workstations, mobile devices and the like.

An object of the invention is to ease and to accelerate the development of new services.

The object of the invention is met by said method of said specifying features of claim 1, wherein the method is characterized in that first said service is described in a natural language which can be both written and read by humans and processed by a specific software and second the natural language is automatically converted into said source program providing the desired service when executed on a computer.

With the new method according to the invention, it is possible to - e.g. after one time developing and creating a computer program product, that is able to cause a computer to execute the method described above - describe new services in natural language by the 'inventor' of a new service himself, wherein a source program providing said service when executed on a computer is generated automatically.

Up to now, a lot of programmers to be coordinated with each other are necessary to do this, wherein furthermore manually programming new services is very time consuming and costly. By automatically generating source program from a description in natural language, the development of new services is significantly accelerated. Furthermore less people are involved in developing new services. Due to this the development of new services by using the method according to the invention is much more cheaper than according to the state of the art.

The method according to the invention has the advantage over the state of the art that it allows to develop a new service in few days, wherein the best prior art solution requires several weeks to do the same.

In a preferred embodiment of the invention, the desired service is described in a constrained natural language. Thereby the basic idea is to write the specifications of new services in a simple, but Constrained Natural Language (CNL), which can be both written and read by humans and processed by a specific software in order to automatically convert said CNL into a source program providing the desired service when executed on a computer. By using a CNL, the 'inventor' of a new service is forced to use preferably short, precise sentences and, if applicable, appellations - like e.g. keywords - when describing the desired service in natural language. It is thinkable that preferably the structure of the description is specified, wherein the CNL is free enough to use own words to describe a new service.

In another preferred embodiment of said invention, converting the natural language, that is preferably a CNL, into source program is processed step-by-step, wherein a semantic matching is used in order to transform gradually the natural language into lower level internal and temporary forms, to reach finally the lowest level, a source program that can be compiled. Semantic methods are known e.g. from artificial advisors such as Internet advisors on certain web-pages and Internet portals or e.g. from Internet agents users can communicate with via natural language input. Thereby typically self learning knowledge bases comprising tables populated with plenty of synonyms assigned to specific words are used to handle natural language inputs. From Mcllraith et a/ "Semantic Web Services" IEEE Intelligent Systems 2001, pp.46-53 it is known to use semantic mark-up of web services to create distributed knowledge bases Internet agents can use to populate their local knowledge bases so that they can reason about web services to perform automatic web services discovery, execution, and composition of interaction. In contrast to the state of the art, the invention deals with an automatic generation of a source program from a certain kind of natural language description of a desired service, wherein semantic matching is used to translate the natural language into lower level forms that can be automatically converted into compilable source program.

In an additional preferred embodiment of said invention, the step-by-step processing comprises the steps of automatically rewriting the unstructured fuzzy natural language into a structured fuzzy constrained natural language, applying a semantic matching to translate the structured fuzzy constrained natural language into a clean constrained natural language, transcription of the clean constrained natural language into a source program body, and completing the source program body into a compilable source program.

A particularly preferred embodiment of said invention is characterized in that the source program received by automatically converting the natural language at least comprises classes and/or objects such as C# and/or Java classes and/or objects e.g. to be finally composed to a desired source program. In another preferred embodiment of the invention, said method is performed by a computer program product stored on a computer usable medium comprising computer readable program means for causing a computer to perform the method mentioned above, when said computer program product is executed on a computer.

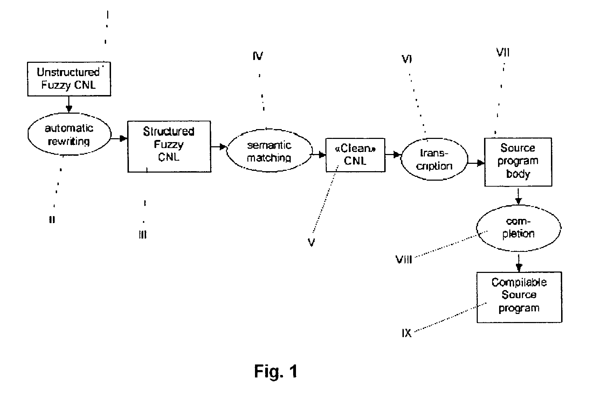

In Fig. 1 a scheme of a method to automatically generate source program is shown. Thereby in a first step I an unstructured, fuzzy CNL is written by an editor, wherein the unstructured, fuzzy CNL describes a new service in the words of the editor. The CNL is a natural language, with close rules for syntax and semantics, in order to facilitate the interpretation and processing by a specific software. The CNL can be written by a non-software specialist, and due to this in the first step I it can be described as unstructured and fuzzy.

In a second step II the unstructured, fuzzy CNL is automatically rewritten to get a structured fuzzy CNL in a third step III. In a fourth step IV a semantic matching is used to process the structured fuzzy CNL of step III into a clean CNL in a fifth step V. The clean CNL in a sixth step VI is transcripted to receive a source program body in a seventh step VII. This source program body is completed in an eight step VIII to finally reach a compilable source program in a ninth step IX.

A basic idea of the invention is to write the specifications of new services in a simple, but constrained natural language (CNL), which can be both written and read by humans and processed by a specific software.

Another idea of the invention is to use CNL to describe new services, wherein the CNL is associated with the key concept of a semantic matching, that allows to get e.g. the right and complete signature of an operation of a service from the semantic trees attached to a repository of legacy services.

The key concept of this processing is to use a step-by-step processing and a "semantic matching", in order to transform gradually the natural language into lower level forms, to finally reach the lowest level, a compilable source program. The step-by-step automatic processing is described in the following by an example.

Supposing an analyst wants to build a new service that is a business process that links together some calls to several legacy services. The analyst knows the existence of the legacy services, but he doesn't know the exact names of the services, nor -of course - the precise names of their operations, neither the parameters of these operations.

The advantage of using CNL is to allow this kind of editor to write simple, short, but constrained sentences to express in a scenario how he wants to use the existing services, but not necessary giving all details of this use.

Now the editor writes a short but sufficient unstructured fuzzy CNL text (step I): *The name of the new service is: Broadcast Message. With this new service, the user wants to broadcast a message to several receivers, according to their messaging preferences. The ne w service uses some existing services, but I ignore their names...*
*Description of the new service: The user gives his name, and the new service gets his corresponding contact list. Then, for each contact of this list, the new service gets the type of messaging corresponding to the contact, and according to this type, it sends a SMS, a Fax or an e-mail to the contact.'*

A first level of transformation, the automatic re-writing in step II, allows to get a structured fuzzy CNL text from this unstructured fuzzy CNL. The aim of the automatic re-writing in step II is to structure the fuzzy original text in four main parts:
1. name of the new service;
2. short description, expressed in a natural free text;
3. list of needed legacy services, wherein the legacy services can still be unknown at this step;
4. detailed description of the new service, expressed in terms of ordered required calls to the existing services.

For the example this structured CNL is the following (step III):
1. New service name: Broadcast Message.
2. The user wants to broadcast a message to several receivers, according to their messaging preferences.
3. The new service uses the following existing services: at this step, not yet defined.
4. Scenario for the new service:
   * user gives his name (the user's name is thus a call parameter for the new service)
   * get user's contact list
   * for each contact of this list:
   * get type of messaging* according to this type:
   * send SMS to contact
   * or send Fax to contact
   * or send e-mail to contact

A second level of transformation, the semantic matching in step IV, processes this structured CNL to establish one-to-one mappings between the expressed needs, like e.g. 'get contact list', 'get type of messaging', 'send SMS', etc., and the exact and precise names of the operations of the existing services. This matching is made by searching the expressed needs in semantic trees attached to the repository of legacy services. Semantic matching allows that the editor of a description that wants to use existing resources such as legacy services to build a new service, does not have to know exactly the names of the existing services.

Thus, this transformation is able to get from the repository the complete signature written in CNL of the operations corresponding to the expressed needs.

This semantic matching in step IV produces a clean CNL (step V; the numbering is only used to improve the traceability):
1. New service name: Broadcast Message.
2. The user wants to broadcast a message to several receivers, according to their messaging preferences.
3. The new service uses the following existing services: DirectoryService, UserPreferenceService, MessagingService.
4. Scenario for the new service:
   * get user's contact list from DirectoryService with user's name
   * for each element of user's contact list:
   * get messaging type from UserPreferenceService with contact name
   * according to messaging type:
   * if Sms: invoke operation sendSMS of MessagingService with contact Mobile phone number and message
   * if Fax: invoke operation sendFax of MessagingService with contact Fax number and message
   * if email: invoke operation sendMail of MessagingService with contact email address and message

The third level of transformation is the transcription of this formal clean and complete CNL into the body of a source program (step VI). This transformation takes in account the generation of keywords, types, declarations, and the like needed by the final source language.

In the following the result of the translation in step VI of the clean CNL of step V into a C# program (step VII) is shown:

```
  [WebService] public class
   BroadcastMessageService:System.Web.Services.WebService        {
         // Attributes
         private DirectoryService theDirectoryService;
         private UserPreferenceService theUserPreferenceService;
         private MessagingService the Messaging Service;
         private ContactInfo□ user_contact_list;
         private msgTypePref messaging_type;
         private int i;
         // Constructor
         public BroadcastMessageService()
         {
                theDirectoryService = new DirectoryService();
                theUserPreferenceService = new UserPreferenceService();
                theMessagingService = new MessagingService();
         }
         // Operations [WebMethod]
        public void BroadcastMessage(String user_name, String message)
        {
               user_contact_list =
                      theDirectoryService.GetMyContactList(user_name);
               for (i=0; i<=user_contact_list.Length; i++)
                      {messaging_type =
                              theUserPreferenceService.
                                     GetMessagePreference
                                            (user_contact_list[i].Name);
                switch (messaging_type) {
   case msgTypePref.Sms: {
                       theMessagingService.SendSMS
                       (user_contact_list[i].Mobile,message);
                       break; }
   case msgTypePref.Fax: {
                       theMessagingService.SendFax
                       (user_contact_list[i].Fax,message);
                       break;}
   case msgTypePref.Email: default: {
                       theMessagingService.SendMail
                       (user_contact_list[i].EmailAddress,message);
                       break;}
                       } // end switch
                } // end for
         } // end operation
   } // end class
```

Finally, a last level of transformation, the completion of step VIII, allows to complete the source program body of step VII with the 'import' or 'using' clauses, the namespaces, and the like, needed by the compiler and the deployer environments, to receive finally a compilable and deployable source program in step IX.

The four processing steps rewriting (step II), semantic matching (step IV), transcription (step VI), completion (step VIII) are fully automatic and integrated in a stand-alone software component, that allows to produce directly a compilable source program from an unstructured fuzzy CNL text.

According to the invention, the unstructured fuzzy CNL is gradually transformed into low level languages, also internal and temporary languages, to finally reach the lowest step, a final transcription, semantically equivalent to the original specification, but written under the form of a compilable source program.

In summary, the invention allows to process a text written in natural language, in order to transform it into a compilable and executable source program. It is achieved to be able to directly process the specifications of new services, written in natural language by non-software-specialist editors. This processing allows to generate software models and code e.g. in Java or C# within a MDA approach (Model-Driven Architecture, defined by OMG (Object Management Group)).

The invention has the following advantages: The original scenario can be written directly in CNL by an editor that is a non-specialist with no knowledge of software engineering. The editor has not to know the exact names of operations, parameters or existing services. The editor can write in his own words what he wants to do e.g. with the legacy services, and-regarding the example described above - in which order he wants to link the different calls. The automatic processing of CNL allows to accelerate the development of new services and to introduce new service earlier than according to the state of the art.

Good object models that are consistent with the scenarios and use cases described by the editor can be created faster.

The new solution is useful in the scope of MDA (OMG's Model-Driven Architecture), in which the model productions and transformations are numerous and require light and easy processes to create object models rapidly.

In economic terms, through the possibility to generate e.g. Java or C# classes from CNL with a specific tool, the invention is of particular interest for developers of new services, because it does not imply any need of external licences purchase.

The invention is commercially applicable particularly in the field of developing and providing source program providing new services when executed on a computer.

## Claims

1. Method to generate a source program providing a certain service when executed on a computer, **characterized in that** first said service is described in a natural language and second the natural language is automatically converted into said source program.

2. Method according to claim 1, **characterized in that** the service is described in a constrained natural language.

3. Method according to claim 1 or 2, **characterized in that** converting the natural language into source program is processed step-by-step, wherein a semantic matching is used in order to transform the natural language into lower level forms, to reach finally a source program that can be compiled.

4. Method according to claim 3, **characterized in that** the step-by-step processing comprises the steps of: automatically rewriting the unstructured fuzzy natural language into a structured fuzzy constrained natural language, applying a semantic matching to translate the structured fuzzy constrained natural language into a clean constrained natural language, transcription of the clean constrained natural language into a source program body, and completion of the source program body into a compilable source program.

5. Method according to one of the previous claims, **characterized in that** the source program received by automatically converting the natural language at least comprises classes and/or objects to be composed to source program.

6. A computer program product stored on a computer usable medium comprising computer readable program means for causing a computer to perform the method of anyone of the claims 1 to 5, when said computer program product is executed on a computer.
